# EUROPEAN PATENT APPLICATION

(11) **EP 4 650 403 A1**
(43) Date of publication of application: **19.11.2025**
(21) Application number: 24706165.8
(22) Date of filing: 05.01.2024
(51) Int. Cl.: C09D 11/037, C09D 11/322, B41M 1/12

(54) **METHOD FOR OBTAINING AND APPLYING A DIGITAL INK FOR PRINTING ON A PIECE OF GLASS HAVING A FUNCTIONAL FILM AND INK OBTAINED USING THE METHOD**

(30) Priority: 10.01.2023 ES 202330007
(71) Applicant: Tecglass SL, 36500 Lalin (Pontevedra) (ES)
(72) Inventor: FERNÁNDEZ VÁZQUEZ, Juan Javier, 36500 Lalin (Pontevedra) (ES); DI LONARDO, Domenico, 26010 Vaiano Cremasco (CR) (IT)
(74) Representative: Pons IP
(86) International application number: PCT/ES2024/070004
(87) International publication number: WO 2024/149920

(57) **Abstract**

Procedure for obtaining a digital ink for application on glass provided with a functional film or thin film, so that although the frit has been ground or milled to be used as digital ink this does not affect its ability to dissolve the functional film or thin film during its application and comprises the steps of:
- Dispersing the frit in an organic medium.
- Performing an initial wet grinding using zirconia micro-bead mills to a particle size of 2 microns.
- Using an in-line iron remover to remove iron particles.
- Performing a thermal process to calcine and remove all remaining contaminants present.
- Once the thermal process is finished, it is subjected to a second wet milling process with zirconia micro-bead mills to a particle size between 1 and 1.7 microns.

## Description

### OBJECT OF THE INVENTION

The object of the present invention, as the title of the invention suggests, is a procedure for obtaining and applying a digital ink for printing on a glass having a functional film, as well as also the ink obtained by means of said procedure.

The present invention is characterised in that the actions carried out in the obtaining of the digital ink which allow that ink to be used in the printing of glass provided with a functional film or also known as "thin film".

Therefore, the present invention belongs to the field of printing on glass and particularly to digital printing systems.

### BACKGROUND TO THE INVENTION

In digital printing, for which inks called digital inks or inkjet inks are used, the design that can be applied on glass does not require the use of screens, therefore, the flexibility of the system is much greater the design can be changed from glass to glass.

In the case of screen printing, a physical screen is used to transfer the design to the glass, i.e. each different glass size or design requires a change of screen in the application machine, making the change of design and glass size costly and time consuming.

The thin film is usually applied on glass by the PVD (Physical Vapour Deposition) method, which consists of a physical-thermal collision process that transforms the material to be deposited, called the target, into atomic particles, which are directed to the substrates in a gaseous plasma state through a vacuum atmosphere, generating a physical coating by condensation of projected atoms.

This film has different compositions and layers depending on the functional characteristic that is to be given to the glass, which can be among other things:
1. Low emissivity films to reduce the passage of infrared radiation through the glass, reducing heat loss or gain. Infrared reflective films are usually conductive metals such as silver, gold, copper etc., which reduce radiant heat transmission.
2. Transparent dielectric films are mainly used to reduce visible reflectance and control other properties of coatings, such as colour. Commonly used transparent dielectrics include zinc, tin, indium, indium, bismuth and titanium oxides, and alloys and mixtures thereof, as well as certain nitrides (e.g., silicon nitride and titanium nitride). Low emissivity coatings are typically deposited on glass substrates using known magnetron sputtering techniques.
3. Photocatalytic films are applied to provide self-cleaning characteristics to glass. Titanium oxide is said to be the most powerful photocatalytic material.
4. Hydrophobic films to repel water from the glass surface
5. Hydrophilic films to prevent water accumulation and glass staining
6. Anti-reflective films, which may be silica.
7. More functional films

In screen printing, only one thickness of ink can be applied to a screen. To change the thickness of the ink to be applied, the screen must be changed, and the ink thicknesses that can be applied to the screens are limited to the manufacturing limitations of the screen itself.

In digital printing, however, a great advantage is that the thickness of ink applied can be varied so that for each type of thin film to be dissolved, the thickness of ink that best dissolves it can be chosen very quickly and easily.

There are known ceramic glazes for application by screen, roller or spray method that dissolve thin films, but these cannot be used in the digital printing method as the inks that can be used in this type of technology must have a solid particle size < 3 µm and the known glazes have solid particle sizes > 3µm.

In order to be used, inkjet inks must contain a maximum particle size of 3 µm and the solid components of these inks must have been milled or ground to reduce the particle size, but this milling or grinding affects their ability to dissolve the functional films or thin film.

The known methods of dry or wet grinding or milling directly affect the ability of the frit to dissolve the functional films or thin film or coating.

Frits, during the normal production process, can be contaminated from different sources:
i. water when cooling (especially chlorine)
ii. steel with which it is in contact during various processes
   a. During fritting with the steel pipes that carry the frit to the water, the frit is contaminated with metallic particles that are incorporated into the frit.
   b. During frit drying
   c. During dry milling or jet milling with the steel walls of the mill becoming contaminated with metallic particles that are incorporated into the frit.

These contaminants appear not to affect (and do not affect because they are used as such) particle sizes > 3 microns.

When grinding at particle sizes below 3 microns, these contaminants become important because they are released from the frit particles during grinding and directly affect the dissolution capacity of the functional, or thin film, causing the functional film to dissolve incorrectly.

Therefore, it is the object of the present invention to develop a method of obtaining and applying a digital ink which does not affect its ability to dissolve the functional films or thin film applied on the glass, developing a method such as the one described below and set forth in its essentialness in the first claim.

### DESCRIPTION OF THE INVENTION

The object of the present invention is essentially contained in the independent claim and the different embodiments are contained in the dependent claims.

The present invention has as its object a process for obtaining and applying a digital ink for its application on glass provided with a functional film or thin film, so that even though the frit has been ground or milled to be used as digital ink it does not affect its ability to dissolve the functional film or thin film during its application.

The stages of the process for obtaining a digital ink to be used on glass with a functional film or thin film are as follows:
The starting point is a frit powder normally used in screen printing or any other analogous method
- Dispersing the frit in an organic medium.
- Perform a first wet milling, using zirconia micro-bead mills of 1.0 to 1.5 mm in diameter, to a particle size of 2 microns.
- During this grinding, an in-line magnetic iron remover is used to remove the metallic particles with which the frit was contaminated during the manufacturing process. Magnetic iron removers are suitable for trapping ferromagnetic and paramagnetic metals in all types of liquids. They are permanent magnet systems with thick meshes through which the liquid passes that will retain the metallic impurities.

- These iron removers can be of ferrite or rare earth magnets. The latter are usually chosen because they are more powerful. The removal of these metal particles is critical as it greatly affects the ink's ability to dissolve the metals in the thin film.
   - Once ground, it is dried and subjected to a thermal process to calcine and eliminate all remaining contaminants.
   - Once the thermal process is finished, it is subjected to a second wet milling process with zirconia micro-bead mills of between 0.3 and 0.5 mm in diameter to a particle size of between 1 and 1.7 microns.

The frit thus ground to this particle size is ready to be used in the ink and perform its function of dissolving the functional film or thin film.

The ink thus obtained has the following characteristics
- It comprises 30 to 50% glass frit capable of dissolving the functional film or thin film
- It comprises 15 to 35% of a ceramic pigment that will give the final colour after dissolving the functional film or thin film
- A solid ink content of between 45 to 65% by adding glass frit and pigment
- Between 35 to 55% of organic material is needed as a vehicle for application on the substrate, which is a mixture of solvents, dispersants, resins, surfactants and additives.
- The solid particles of the ink with a size of less than 3 microns in order to be applied by digital printing. This point, regarding the size of the solid particles, is fundamental because the frits and pigments as they are found on the market for use in screen printing or any other analogous method (roller or gun) are usually of a size between 3 to 12 microns.
- It is free of contaminants such as metallic particles and chlorine

The use of digital printing avoids the need to clean screens and utensils every time it is printed, therefore the reduction of waste generation is stark, since washing a screen that was used for screen printing requires at least 30 to 50 litres of liquid (water or solvent depending on the type of paint used) that must be treated for proper disposal.

Digital inks or inkjet inks are inks that can be applied in both multi-pass and single-pass printing machines, and their use is not limited by the type of machine on which they are used.

It is also known that in the application of ceramic glazes by analogous methods (screen printing, roller, spray, etc.) with the function of dissolving the thin film layers, the thickness of glaze applied is very relevant in the capacity of complete dissolution of certain complex and multi-layered thin films. Specifically, ceramic glazes usually have a solid content of 75% and as a consequence, when a greater wet thickness is applied, a greater amount of frit and pigment is deposited, the frit being responsible for dissolving the film.

In the case of inkjet inks, due to the very low viscosity required for their application, it is not always possible to apply an ink thickness similar to that applied by traditional methods. To dissolve the more complex thin films for which more frit is needed, the double printing method can be used. The first printing with an ink with almost all the solid content in frit (between 45-50%) and the second printing with an ink with a higher pigment content (25-35%), thus increasing the mass of frit that can be deposited in a single printing, achieving the complete dissolution of the more complex multilayer films.

An intermediate drying process may or may not take place between the printing of the ink of the first print and the ink of the second print.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### PREFERRED EMBODIMENT OF THE INVENTION

In one possible embodiment, the particular characteristics of the steps of the process for obtaining a digital ink to be used on glass provided with a functional film or thin film are as follows:
The starting point is a frit powder normally used in screen printing or any other analogous method
- Disperse the frit in an organic medium of the following weight percentage composition:
   o Frit between 60-75%
   ∘ Solvent between 20 to 35%
   ∘ Dispersant between 1 to 10%
- Perform wet milling using traditional zirconia micro-bead mills from 1 mm to 1.5 mm in diameter to a particle size of 2 microns.
- During this grinding, an in-line iron remover is used to remove the metallic particles with which the frit was contaminated during the manufacturing process.
- Once ground, it is dried and subjected to a 24-hour thermal process at 350 degrees +/-20 degrees to calcine and eliminate all remaining contaminants present.
- Once the thermal process is finished, it is subjected to a second wet milling process with traditional zirconia micro-bead mills of between 0.4 mm to 0.6 mm in diameter to a particle size of between 1 and 1.7 microns.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. **Procedure** for obtaining a digital ink for printing on glass which has a functional film, starting from a frit powder used in screen printing or any other analogous method, comprising the steps of:
- Dispersing the frit in an organic medium.
- Performing an initial wet grinding using zirconia micro-bead mills to a particle size of 2 microns.
- During this grinding, an in-line iron remover is used to remove the metallic particles with which the frit was contaminated during the manufacturing process.
- Once ground, it is dried and subjected to a thermal process to calcine and eliminate all remaining contaminants.
- Once the thermal process is finished, it is subjected to a second wet milling process with zirconia micro-bead mills to a particle size between 1 and 1.7 microns.

2. Procedure for obtaining a digital ink for printing on glass that has a functional film according to claim 1, **characterised in that** the organic medium in which the frit is dispersed has the following percentage composition by weight.
∘ Frit between 60-75%
∘ Solvent between 20 to 35%
∘ Dispersant between 1 to 10%

3. Procedure for obtaining a digital ink for printing on glass which has a functional film according to claim 1, **characterised in that** the Zirconia micro-beads for wet grinding have a diameter of between 1 mm to 1.5 mm.

4. Procedure for obtaining a digital ink for printing on glass which has a functional film according to claim 1, **characterised in that** the thermal process to which the frit is subjected once the metallic particles have been removed is a 24-hour thermal process at 350°C +/- 20 °C.

5. Procedure for obtaining a digital ink for printing on glass which has a functional film according to claim 1 **characterised in that** the zirconia micro-beads of the second milling have a size of between 0.4 mm to 0.6 mm in diameter.

6. Digital ink obtained by the process of obtaining the digital ink according to any one of claims 1 to 5 **characterised in that** it comprises:
- 30 to 50% glass frit capable of dissolving the functional film or thin film
- Between 15 to 35% of a ceramic pigment that will give the final colour after dissolving the functional film or thin film.
- A solid ink content of between 45 to 65% by adding glass frit and pigment
- Between 35 to 55% of organic material is needed as a vehicle for application on the substrate, which is a mixture of solvents, dispersants, resins, surfactants and additives.
- The solid particles of the ink are of a size less than 3 microns in order to be applied by digital printing.
- It is free of particulate metal contaminants and chlorine.

7. Application of the ink of claim 6 **characterised in that** it is applicable to both single pass and multi-pass digital printing machines.

8. Method of printing with a digital ink obtained according to claim 6 **characterised in that** a double printing method is used whereby a first printing is made with an ink with almost all the solid content in frit (between 45-50%) and then a second printing with an ink with a higher pigment content (25-35%), thus increasing the mass of frit that can be deposited in a single printing, with the result that it completely dissolves the most complex multilayer films.

9. Printing method according to claim 8 **characterised in that** between the first printing and the second printing an intermediate drying process is carried out.
